# FASCICULE DE BREVET EUROPEEN

(11) **EP 3 784 618 B1**
(45) Date de publication et mention de la délivrance du brevet: **17.11.2021**
(21) Numéro de dépôt: 19726058.1
(22) Date de dépôt: 23.04.2019
(51) Int. Cl.: B66F 11/04, B60W 30/18, F02N 11/00

(54) **ENGIN ROULANT EQUIPE D'UNE FONCTIONNALITE D'ARRET AUTOMATIQUE DU MOTEUR THERMIQUE ET PROCEDE D'OPTIMISATION DES CONDITIONS D'ARRET D'UN TEL ENGIN**
BEWEGLICHE MASCHINE MIT EINER AUTOMATISCHEN ABSCHALTFUNKTION FÜR DEN VERBRENNUNGSMOTOR UND VERFAHREN ZUR OPTIMIERUNG DER ABSCHALTBEDINGUNGEN EINER SOLCHEN MASCHINE
MOVING MACHINE EQUIPPED WITH AN AUTOMATIC SHUTDOWN FUNCTION FOR THE INTERNAL COMBUSTION ENGINE AND METHOD FOR OPTIMIZING THE SHUTDOWN CONDITIONS OF SUCH A MACHINE

(30) Priorité: 26.04.2018 FR 1853677
(43) Date de publication de la demande: 03.03.2021
(73) Titulaire: MANITOU BF, 44150 Ancenis (FR)
(72) Inventeur: HUBERT, Fabrice, 44150 ANCENIS (FR)
(74) Mandataire: Ipsilon
(86) Numéro de dépôt international: PCT/FR2019/050960
(87) Numéro de publication internationale: WO 2019/207247

(56) Documents cités:
- EP-A1- 2 685 070
- EP-A2- 1 526 276
- WO-A1-2017/003425
- DE-A1-102009 018 974
- US-A1- 2014 121 865

## Description

### DOMAINE DE L'INVENTION

L'invention concerne un engin roulant équipé d'une fonctionnalité d'arrêt automatique du moteur thermique et un procédé d'optimisation des conditions d'arrêt d'un tel engin.

Elle concerne plus particulièrement un engin roulant comprenant :
- un châssis, un moteur thermique porté par ledit châssis, un démarreur dudit moteur et au moins un organe d'actionnement dudit démarreur,
- une unité de pilotage,
- un organe de mise sous tension au moins de l'unité de pilotage, ledit organe de mise sous tension étant apte à passer d'un état actif à un état inactif et inversement,
ledit engin comprenant un mode de fonctionnement dit économique dans lequel, à l'état activé de l'organe de mise sous tension et à l'état démarré du moteur, l'unité de pilotage est configurée pour permettre d'arrêter le moteur de manière automatique, c'est-à-dire sans actionnement de l'organe de mise sous tension, ledit arrêt étant appelé arrêt sous tension du moteur.

### ART ANTERIEUR

Les engins équipés d'une fonctionnalité d'arrêt et de démarrage ultérieur ou redémarrage automatique du moteur, couramment désignée sous l'expression anglaise de "STOP AND START", sont bien connus à ceux versés dans cet art.

L'arrêt et le démarrage ultérieur de manière automatique du moteur sont conditionnés à des critères qui peuvent être liés au comportement du conducteur et aux actions qu'il entreprend et/ou à des paramètres intrinsèques liés à l'état du véhicule. Grâce à une telle fonctionnalité d'arrêt et de démarrage ultérieur de manière automatique du moteur, il en résulte une réduction du coût total de possession (TCO) et, lorsque le véhicule est arrêté, une réduction de la consommation en carburant. Toutefois, ces arrêts et démarrages successifs sont susceptibles de créer une usure prématurée du moteur et du démarreur associé.

Un engin roulant du type précité est connu comme l'illustrent les documents WO 2017/003425, DE-10 2009 018974, EP-2.685.070, US 2014/121865 et EP-1.526.276.

### BUT ET RESUME

Un but de l'invention est de proposer un engin roulant dont la conception permet d'arrêter et de démarrer de manière automatique le moteur dudit engin en limitant les risques d'endommagement prématuré du moteur et du démarreur associé.

A cet effet, l'invention a pour objet un engin roulant comprenant :
- un châssis, un moteur thermique porté par ledit châssis, un démarreur dudit moteur et au moins un organe d'actionnement dudit démarreur,
- une unité de pilotage,
- un organe de mise sous tension au moins de l'unité de pilotage, ledit organe de mise sous tension étant apte à passer d'un état actif à un état inactif et inversement,
   ledit engin comprenant un mode de fonctionnement dit économique dans lequel, à l'état activé de l'organe de mise sous tension et à l'état démarré du moteur, l'unité de pilotage est configurée pour permettre d'arrêter le moteur de manière automatique, c'est-à-dire sans actionnement de l'organe de mise sous tension, ledit arrêt étant appelé arrêt sous tension du moteur,
   l'engin roulant comprenant encore une mémoire pour mémoriser des données relatives au nombre de démarrages du moteur thermique de l'engin et l'unité de pilotage étant configurée, pour en mode de fonctionnement économique de l'engin, autoriser ou interdire l'arrêt sous tension du moteur au moins en fonction desdites données mémorisées, caractérisé en ce que l'engin roulant comprend une mémoire pour mémoriser chaque valeur de temps relative au temps de mise sous tension écoulé entre deux démarrages successifs du moteur thermique et en ce que l'unité de pilotage est configurée pour, n étant un nombre entier supérieur ou égal 1,
- calculer la somme des n dernières valeurs de temps mémorisées avec la valeur de temps relative au temps de mise sous tension écoulé depuis le démarrage en cours,
- comparer ladite valeur calculée avec une valeur seuil prédéfinie et,
- autoriser l'arrêt sous tension du moteur au moins en fonction du résultat de la comparaison.

Il est ainsi possible avec cette condition d'éviter un trop grand nombre d'arrêts et par suite, de démarrages automatiques du moteur cumulés sur un temps très court.

La possibilité de mémoriser le nombre de démarrages du moteur permet d'associer ensuite cette donnée à d'autres données pour autoriser ou non l'arrêt sous tension du moteur, cet arrêt pouvant s'opérer de manière automatique dans des conditions prédéfinies.

Selon un mode de réalisation de l'invention, en mode de fonctionnement économique, l'unité de pilotage est configurée pour, à l'état arrêté sous tension du moteur, démarrer le moteur sans actionnement du au moins un organe d'actionnement du démarreur. L'engin est donc pourvu d'une fonctionnalité de redémarrage dit automatique du moteur apte à s'opérer dans des conditions prédéfinies.

Selon un mode de réalisation de l'invention, l'engin roulant comprend une mémoire pour mémoriser des données relatives au temps T écoulé de mise sous tension de l'engin depuis sa mise en service, ladite mise sous tension de l'engin correspondant à l'état actif de l'organe de mise sous tension, et l'unité de pilotage est configurée pour, en mode de fonctionnement économique de l'engin, autoriser ou interdire l'arrêt sous tension du moteur au moins en fonction desdites données mémorisées.

Ainsi, dans ce mode de réalisation de l'invention, de préférence, l'unité de pilotage est configurée pour :
- calculer le nombre D de démarrages de l'engin depuis sa mise en service sur le temps T écoulé de mise sous tension de l'engin depuis sa mise en service,
- comparer le résultat du calcul avec une valeur seuil prédéterminée mémorisée, et
- autoriser l'arrêt sous tension du moteur au moins lorsque le résultat du calcul est inférieur à la valeur seuil prédéterminée mémorisée.

Il en résulte une absence d'autorisation d'un arrêt automatique du moteur au moins lorsque, par exemple, le nombre de démarrages par heure est supérieur à une valeur seuil prédéterminée. Toutefois, il est possible dans ces conditions, pour un engin qui cumule un grand nombre d'heures de fonctionnement pour un faible nombre de démarrage, d'avoir, sur une période de temps courte, un grand nombre de démarrages.

Selon un mode de réalisation de l'invention, l'organe de mise sous tension de l'engin est une clé disposée sur le châssis, cette clé étant une clé rotative apte à passer par rotation d'un état inactif à un état actif et inversement.

Selon un mode de réalisation de l'invention, le châssis est équipé d'un poste de commande et le ou au moins l'un des organes d'actionnement du démarreur est formé par un bouton de démarrage équipant ledit poste.

Selon un mode de réalisation de l'invention, l'engin est une nacelle élévatrice comprenant :
- outre le châssis portant ledit moteur thermique,
- une plateforme,
- des moyens d'élévation de la plateforme par rapport au châssis, lesdits moyens d'élévation comprenant au moins un bras de levage télescopique ou non télescopique disposé entre une zone de raccordement à la plateforme et le châssis et monté mobile à l'aide du moteur thermique entre une position haute et une position basse,

- un pupitre de commande porté par ladite plateforme et équipé au moins d'une commande des moyens d'élévation,
- un organe d'activation/inactivation d'au moins la commande des moyens d'élévation, ledit organe d'activation/inactivation étant monté mobile entre une position inactive, dans laquelle au moins la commande des moyens d'élévation est désactivée et une position active dans laquelle au moins la commande des moyens d'élévation est activée, ledit organe d'activation/inactivation étant équipé de moyens de rappel en position inactive, et étant apte à passer de la position inactive à la position active sous l'action d'une poussée exercée sur ledit organe d'activation/inactivation à l'encontre des moyens de rappel, et
- un indicateur de la position active/inactive de l'organe d'activation/inactivation; l'unité de pilotage est configurée pour commander les moyens d'élévation en fonction au moins des données fournies par ledit pupitre de commande,
ladite nacelle présente deux configurations à savoir une configuration transport et une configuration travail, ladite nacelle étant en configuration transport en position basse du bras et rentrée du bras dans le cas d'un bras télescopique, et en configuration travail de la nacelle, et en mode de fonctionnement économique, l'unité de pilotage est configurée pour, à l'état autorisé de l'arrêt sous tension du moteur, commander l'arrêt sous tension du moteur thermique au moins en fonction des données fournies par ledit indicateur de la position active/inactive de l'organe d'activation/inactivation d'au moins la commande des moyens d'élévation.

Ainsi, dans un tel mode de réalisation, l'unité de pilotage est, à l'état autorisé de l'arrêt sous tension du moteur, configurée pour commander l'arrêt sous tension du moteur au moins si l'organe d'activation/inactivation est en position inactive.

Dans ce mode de réalisation, en configuration travail de la nacelle et en mode de fonctionnement économique, à l'état arrêté sous tension du moteur thermique, l'unité de pilotage est configurée pour commander le démarrage du moteur thermique à l'aide de l'organe d'activation/inactivation d'au moins la commande des moyens d'élévation, par passage de l'organe d'activation/inactivation de la position inactive à la position active, sans actionnement du ou des organes d'actionnement du démarreur. Il en résulte une simplicité de redémarrage.

Selon un mode de réalisation de l'invention, l'unité de pilotage comprend un module de détermination de présence configuré pour déterminer l'état présent ou absent d'une personne sur la plate-forme en fonction de données fournies par le pupitre de commande et, en configuration travail de la nacelle, en mode de fonctionnement économique, l'unité de pilotage est configurée pour, à l'état autorisé de l'arrêt sous tension du moteur, commander l'arrêt sous tension du moteur thermique au moins en fonction dudit état déterminé par le module de détermination de présence. Ainsi, de préférence, l'unité de pilotage est configurée pour commander l'arrêt sous tension du moteur au moins à l'état présent d'une personne sur la plateforme.

Selon un mode de réalisation de l'invention, l'engin comprend un organe activable/désactivable de commande de démarrage à froid du moteur thermique et un module de détermination de l'état activé/désactivé dudit organe de commande, cet organe de commande étant activable par actionnement manuel, et désactivable de manière automatique, et, en mode de fonctionnement économique, l'unité de pilotage est configurée pour, à l'état autorisé de l'arrêt sous tension du moteur, commander l'arrêt sous tension du moteur thermique au moins en fonction de l'état activé/désactivé dudit organe de commande de démarrage à froid déterminé par ledit module. Ainsi, de préférence, l'unité de pilotage est configurée pour commander l'arrêt sous tension du moteur au moins à l'état désactivé dudit organe de commande de démarrage à froid.

Selon un mode de réalisation de l'invention, l'engin comprend au moins un générateur d'électricité, et un module de détermination de l'état activé/désactivé dudit générateur d'électricité et, en mode de fonctionnement économique, l'unité de pilotage est configurée pour, à l'état autorisé de l'arrêt sous tension du moteur, commander l'arrêt sous tension du moteur thermique au moins en fonction de l'état activé/désactivé du générateur d'électricité déterminé par ledit module. Ainsi, de préférence, l'unité de pilotage est configurée pour commander l'arrêt sous tension du moteur au moins à l'état activé du générateur d'électricité.

Selon un mode de réalisation de l'invention, le mode de fonctionnement économique est un mode activable /désactivable et l'engin comprend un organe d'activation et/ou de désactivation dudit mode.

En variante, le mode de fonctionnement économique peut être activé par défaut, lors du démarrage du moteur par actionnement de l'organe d'actionnement du démarreur.

L'invention a encore pour objet un procédé d'optimisation des conditions d'arrêt d'un engin roulant comprenant
- un châssis, un moteur thermique porté par ledit châssis, un démarreur dudit moteur et au moins un organe d'actionnement dudit démarreur,
- une unité de pilotage,
- un organe de mise sous tension au moins de l'unité de pilotage, ledit organe de mise sous tension étant apte à passer d'un état actif à un état inactif et inversement,
ledit engin comprenant, à l'état activé de l'organe de mise sous tension et à l'état démarré du moteur, un mode de fonctionnement dit économique dans lequel l'unité de pilotage est configurée pour permettre d'arrêter le moteur de manière automatique, c'est-à-dire sans actionnement de l'organe de mise sous tension, ledit arrêt étant appelé arrêt sous tension du moteur, ledit procédé comprenant une étape de mémorisation des données relatives au nombre de démarrages du moteur de l'engin, et l'arrêt sous tension du moteur étant autorisé au moins en fonction desdites données mémorisées, caractérisé en ce que le procédé comprend une étape de mémorisation de chaque valeur de temps relative au temps de mise sous tension écoulé entre deux démarrages successifs du moteur thermique, une étape de calcul de la somme des n dernières valeurs de temps mémorisées avec la valeur de temps relative au temps de mise sous tension écoulé depuis le démarrage en cours, n étant un nombre entier supérieur ou égal à 1, une étape de comparaison de ladite valeur calculée avec une valeur seuil prédéfinie, l'arrêt de tension du moteur étant autorisée au moins en fonction des résultats de la comparaison.

Selon un mode de mise en oeuvre du procédé, le procédé comprend une étape de mémorisation des données relatives au temps T écoulé de mise sous tension de l'engin depuis sa mise en service, ladite mise sous tension correspondant à l'état actif de l'organe de mise sous tension, et l'arrêt sous tension du moteur est autorisé au moins en fonction desdites données mémorisées.

Selon un mode de mise en oeuvre du procédé, le procédé comprend une étape de calcul du nombre D de démarrages de l'engin depuis sa mise en service sur le temps T écoulé de mise sous tension de l'engin depuis sa mise en service et une étape de comparaison du résultat du calcul avec une valeur seuil prédéterminée mémorisée, l'arrêt sous tension du moteur étant autorisé au moins lorsque le résultat du calcul est inférieur à la valeur seuil prédéterminée mémorisée.

Selon un mode de mise en oeuvre du procédé, le procédé comprend une étape de mémorisation de chaque valeur de temps relative au temps de mise sous tension écoulé entre deux démarrages successifs du moteur thermique, une étape de calcul de la somme des n dernières valeurs de temps mémorisées avec la valeur de temps relative au temps de mise sous tension écoulé depuis le démarrage en cours, n étant un nombre entier supérieur ou égal à 1, une étape de comparaison de ladite valeur calculée avec une valeur seuil prédéfinie, l'arrêt de tension du moteur étant autorisée au moins en fonction des résultats de la comparaison.

### BREVE DESCRIPTION DES DESSINS

L'invention sera bien comprise à la lecture de la description suivante d'exemples de réalisation, en référence aux dessins annexés dans lesquels :

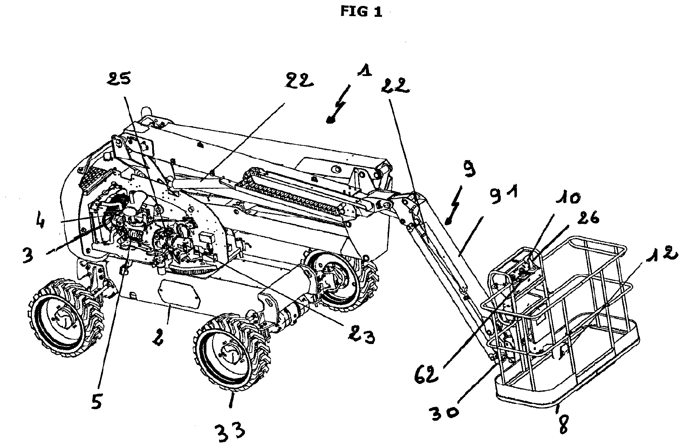

La figure 1 représente une vue en perspective d'un engin, en l'occurrence une nacelle conforme à l'invention en configuration transport, une partie des éléments de la carrosserie ayant été supprimée pour visualiser l'intérieur de la nacelle ;

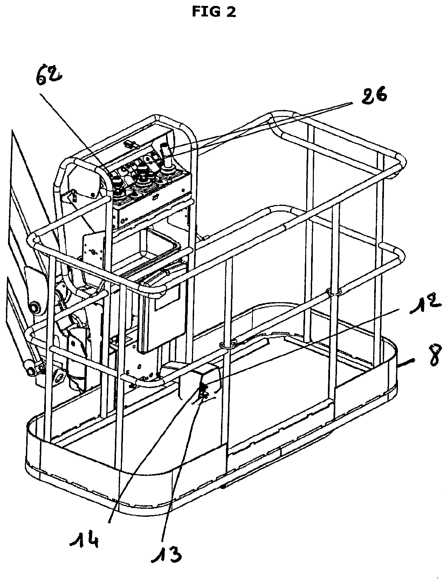

La figure 2 représente une vue en perspective d'une plateforme d'une nacelle conforme à l'invention ;
La figure 3 représente une vue en perspective d'une nacelle conforme à l'invention en configuration transport avec une vue de détail du poste de commande équipant le châssis ;
La figure 4 représente une vue en perspective d'une nacelle conforme à l'invention en configuration travail ;

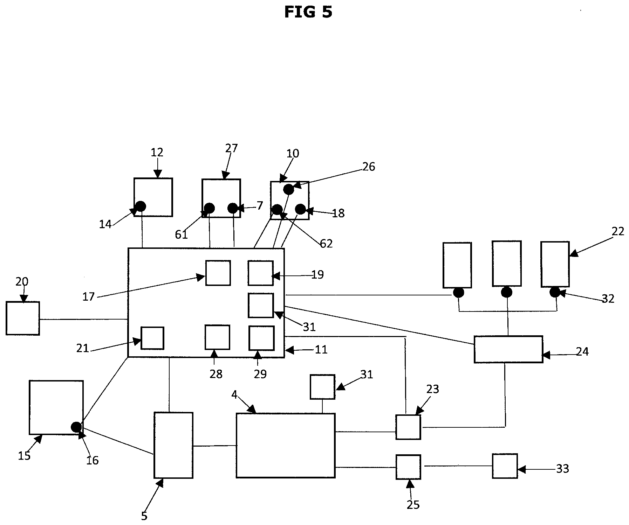

La figure 5 représente sous forme de blocs fonctionnels une partie des éléments de la nacelle ;
La figure 6 représente un chronogramme illustrant le mode de calcul du temps de mise sous tension écoulé entre deux démarrages successifs ;
La figure 7 représente sous forme d'un logigramme une procédure d'autorisation d'arrêt sous tension du moteur ;
Les figures 8a et 8b représentent sous forme d'un logigramme une procédure d'autorisation d'arrêt sous tension du moteur.

### DESCRIPTION DETAILLEE

Comme mentionné ci-dessus, l'invention concerne un engin 1 roulant équipé d'une fonctionnalité d'arrêt automatique du moteur. Dans l'exemple illustré, l'engin 1 est une nacelle 1 permettant le travail en élévation d'une personne mais l'invention peut s'appliquer à tout type d'engin roulant sans sortir du cadre de l'invention. L'engin 1 sera donc appelé la nacelle 1 dans la suite de la description.

Cette nacelle 1 comprend un châssis 2 roulant.

Cette nacelle 1 comprend encore un moteur 4 thermique porté par le châssis 2, un démarreur 5 électrique dudit moteur 4 thermique et au moins un organe, en l'occurrence ici deux organes 61, 62 d'actionnement du démarreur 5.

Dans l'exemple représenté le châssis 2 est équipé de quatre roues 33 dont généralement au moins deux sont motrices.

En effet, la nacelle comprend des moyens 3 de déplacement sur la surface du sol du châssis 2 à l'aide des roues 33. Selon un aspect particulier, le moteur 4 thermique est relié aux roues par l'intermédiaire d'une transmission 25 pour former les moyens 3 de déplacement au sol du châssis 2. On peut aussi prévoir que le démarreur 5 électrique dudit moteur 4 thermique et éventuellement ledit au moins un organe 61, 62 d'actionnement du démarreur 5 font partie de ces moyens 3 de déplacement.

Le moteur 4 thermique est ainsi relié aux roues 33 par une transmission 25, de préférence, hydrostatique qui comprend ici une pompe hydrostatique et des moteurs hydrauliques associés chacun à une roue 33 dite motrice. Le détail de cette transmission ne sera pas décrit en détail car une telle transmission est bien connue à ceux versés dans cet art.

Un générateur 20 d'électricité, tel qu'un moteur électrique, peut être associé au moteur 4 thermique et un module 21 de détermination de l'état activé du générateur peut être prévu au niveau de l'unité 11 de pilotage qui sera décrite ci-après.

Le démarreur 5 électrique du moteur 4 thermique est alimenté par une batterie 15 apte à être rechargée via un alternateur qui peut être le générateur 20 d'électricité décrit ci-dessus lorsque le moteur 4 thermique fonctionne. Un indicateur 16 du niveau de charge de la batterie 15 est prévu. Cet indicateur 16 de niveau de charge peut être formé par un organe, tel qu'un capteur de mesure du niveau de charge, c'est-à-dire une caractéristique de charge ou de décharge ou une tension aux bornes de la batterie. Ces informations de mesure peuvent être adressées à l'unité 11 de pilotage décrite ci-après. En variante, cet indicateur 16 du niveau de charge de la batterie 15 peut être formé par un module intégré à l'unité de pilotage.

L'actionnement du démarreur 5 du moteur 4 thermique dans le sens d'un démarrage du moteur 4 thermique peut être réalisé, dans l'exemple représenté, à l'aide de l'un quelconque des deux organes 61, 62 d'actionnement qui se présentent, à chaque fois, sous forme d'un bouton dont l'enfoncement permet l'envoi d'un signal électrique au démarreur. La position de ces organes d'actionnement sera décrite ci-après.

La nacelle 1 comprend encore une plateforme 8 sur laquelle l'opérateur souhaitant travailler en élévation peut prendre place. Cette plateforme 8 qui comprend un plancher et un garde-corps entourant le plancher est équipée d'un pupitre 10 de commande équipé de commande(s) 26 de manière en soi connue. Le détail de ce pupitre 10 de commande sera fourni ci-après.

La nacelle 1 comprend encore des moyens 9 d'élévation de la plateforme 8 par rapport au châssis 2. Ces moyens 9 d'élévation comprennent un bras 91 de levage disposé entre une zone 30 de raccordement à la plateforme 8 et le châssis 2. Ce bras 91 de levage peut être formé d'une ou plusieurs sections de bras articulées les unes aux autres comme dans l'exemple représenté. Ce bras peut être un bras télescopique ou non télescopique.

Pour le passage de la position basse à la position haute du bras, la nacelle comprend une pompe 23 hydraulique couplée au moteur 4 thermique et des actionneurs hydrauliques, en l'occurrence des vérins 22 disposés entre le bras et le châssis, et entre les sections de bras lorsque le bras est en différentes sections.

Ces vérins 22 sont alimentés en fluide hydraulique à l'aide de la pompe 23 hydraulique via un distributeur 24 hydraulique dont le déplacement est commandé à l'aide de signaux fournis à partir de ladite unité 11 de pilotage décrite ci-après.

Des capteurs 32 peuvent être disposés au niveau des vérins et permettent d'identifier la position du piston du vérin et par suite la position haute ou basse du bras 91 de levage. Ces capteurs 32 peuvent encore être disposés au niveau de chaque butée de fin de course équipant le bras et matérialisant la position basse du bras. Les données de ces capteurs 32 de position représentatifs de la position du bras peuvent être adressées à l'unité 11 de pilotage qui sera décrite ci-après.

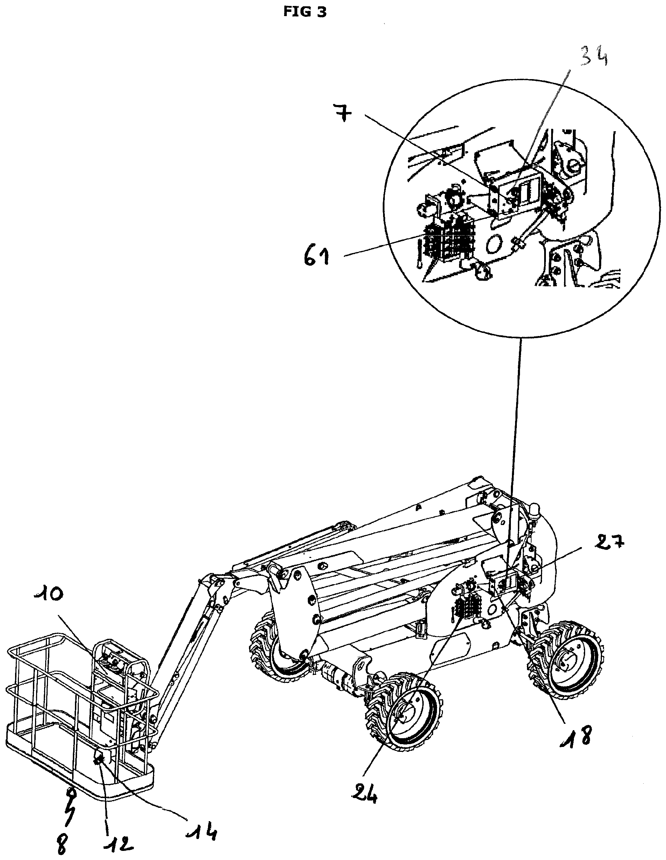

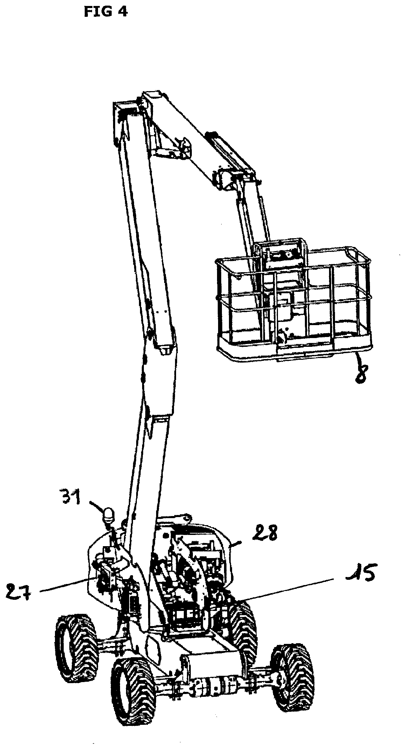

La position basse du bras, telle qu'illustrée à la figure 3, dans laquelle le bras est abaissé au maximum et replié, et la plateforme 8 est située à proximité du sol, est appelée la configuration transport de la nacelle, tandis que la position haute du bras, telle qu'illustrée à la figure 4, dans laquelle le bras 91 de levage est déployé et la plateforme 8 est éloignée du sol, est appelée la configuration travail de la nacelle.

Les capteurs 32 de position sont donc aptes à détecter au moins la configuration de travail de la nacelle 1 et à adresser ces données à l'unité 11 de pilotage.

Il doit être noté que dans le cas d'un bras télescopique, la configuration transport de la nacelle correspond outre la position abaissée du bras à la position rentrée du télescope.

La nacelle 1 comprend encore, comme mentionné ci-dessus, une unité 11 de pilotage. Ladite unité 11 de pilotage se présente sous la forme d'un système électronique et informatique qui comprend par exemple un microprocesseur et une mémoire de travail. Selon un aspect particulier, l'unité de pilotage peut se présenter sous la forme d'un automate programmable.

Autrement dit, les fonctions et étapes décrites peuvent être mises en oeuvre sous forme de programme informatique ou via des composants matériels (p. ex. des réseaux de portes programmables). En particulier, les fonctions et étapes opérées par l'unité de pilotage ou ses modules peuvent être réalisées par des jeux d'instructions ou modules informatiques implémentés dans un processeur ou contrôleur ou être réalisées par des composants électroniques dédiés ou des composants de type FPGA ou ASIC. Il est aussi possible de combiner des parties informatiques et des parties électroniques.

Lorsqu'il est précisé que l'unité ou des moyens ou modules de ladite unité sont configurés pour réaliser une opération donnée, cela signifie que l'unité comprend des instructions informatiques et les moyens d'exécution correspondants qui permettent de réaliser ladite opération et/ou que l'unité comprend des composants électroniques correspondants.

Cette unité 11 de pilotage est apte à recevoir des données d'entrée et à délivrer des données de sortie. Cette unité 11 de pilotage est configurée pour commander les moyens 9 d'élévation, et de préférence les moyens 3 de déplacement, en fonction des données fournies par le pupitre 10 de commande disposé sur la plateforme.

Dans l'exemple représenté, la nacelle comprend en sus du pupitre 10 de commande, un poste 27 de commande monté sur le châssis et appelé poste 27 de commande au sol. Ce poste 27 de commande au sol permet de seconder un opérateur en difficulté sur la plateforme et d'effectuer des opérations sur la nacelle sans avoir à monter sur la plateforme 8.

La nacelle 1 comprend encore un organe 7 de mise sous tension de l'unité 11 de pilotage. Cet organe 7 de mise sous tension est apte à passer d'un état inactif à un état actif et inversement. Cet organe 7 de mise sous tension de la nacelle se présente ici sous forme d'une clé de contact disposée au niveau du poste 27 de commande du châssis 2. Cette clé est une clé rotative apte à passer par rotation d'un état inactif à un état actif et inversement. Le passage en position active de la clé assure la mise sous tension au moins de l'unité 11 de pilotage.

Ce poste 27 de commande au sol est également équipé de l'un des organes d'actionnement du démarreur 5 tels que décrits ci-dessus. Cet organe 61 d'actionnement du démarreur 5 est ici formé par un simple bouton de démarrage. Ce poste 27 de commande au sol peut encore être équipé de commandes en déplacement du bras et du châssis. L'unité 11 de pilotage est également configurée pour commander les moyens 9 d'élévation et les moyens 3 de déplacement en fonction des données fournies par le poste 27 de commande au sol.

Ce poste 27 de commande au sol est également équipé d'un organe 18 activable/désactivable de commande de démarrage à froid du moteur 4 thermique. Cet organe 18 se présente sous forme d'un bouton activable par actionnement manuel et désactivable de manière automatique soit au-delà d'une période d'activation prédéterminée, soit lorsque, par exemple la température de l'huile de l'un des circuits hydrauliques tel que l'huile des circuits des moyens d'élévation ou des moyens de déplacement atteint une température prédéterminée.

Cet organe 18 de commande à froid permet à l'opérateur de savoir quand la nacelle 1 est apte à fonctionner de manière optimale au niveau du moteur 4 thermique.

Un module 19 de détermination de l'état activé de l'organe 18 de commande de démarrage à froid est prévu au niveau de l'unité 11 de pilotage. Ce module permet à l'unité 11 de pilotage de disposer d'une information relative à l'état activé de l'organe 18 de commande de démarrage à froid.

Le pupitre 10 de commande est équipé, quant à lui, du deuxième organe 62 d'actionnement du démarreur 5 du moteur 4 thermique. Cet organe 62 d'actionnement du démarreur 5 du moteur 4 thermique peut être utilisé, par exemple, lors d'un démarrage à froid du moteur ou après un arrêt déclenché suite à l'actionnement d'un bouton d'arrêt d'urgence équipant le pupitre, l'actionnement dudit bouton d'arrêt générant l'arrêt du moteur thermique et la coupure d'alimentation d'un grand nombre d'organes électriques équipant la nacelle.

Le pupitre 10 de commande comprend encore une ou des commandes 26 sous forme de leviers encore appelés joysticks. On comprend qu'une commande peut comporter plusieurs organes de commande. La ou les commandes 26 comprennent une commande d'au moins les moyens 9 d'élévation permettant de commander l'élévation de la plateforme 8 à l'aide du moteur 4 thermique. On peut prévoir que la ou les commandes 26 comprennent uniquement une commande des moyens d'élévation 9, ou encore une commande des moyens d'élévation 9 de la plateforme 8 et une commande des moyens de déplacement 3 pour commander le déplacement des roues. Il est ainsi possible, à partir du pupitre de commande, de commander uniquement le levage du bras, ou le levage et le déplacement au sol de l'engin. Le nombre des leviers peut donc être variable. Il peut, par exemple, être prévu un premier levier pour l'actionnement du levage du bras 91 de levage, un deuxième levier pour la commande marche avant/marche arrière du châssis roulant, et, dans le cas où le bras est monté sur une tourelle pivotante du châssis 2, comme dans l'exemple représenté, un troisième levier pour la commande de rotation de la tourelle. Tous les mouvements de ces leviers peuvent être mesurés par des transducteurs et fournis à l'unité 11 de pilotage sous forme de signaux électriques. En variante, les deuxième et troisième leviers peuvent être supprimés.

En variante encore, la commande des moyens 9 d'élévation de la plateforme et des moyens 3 de déplacement au sol du châssis peut s'opérer à l'aide d'un même levier.

La plateforme 8 comprend encore un organe 12 d'activation/inactivation d'au moins la commande 26 des moyens 9 d'élévation de la plateforme présente sur le pupitre de commande. Dans la suite de la description, il est fait référence par simplification à l'organe 12 d'activation/inactivation.

Selon un aspect particulier, ledit organe 12 d'activation/inactivation permet non seulement d'activer/inactiver au moins la commande des moyens 9 d'élévation de la plateforme, mais aussi d'activer/inactiver la commande des moyens de déplacement 3 au sol du châssis lorsque cette commande est présente sur le pupitre de commande.

Cet organe 12 d'activation/inactivation d'au moins la commande 26 des moyens 9 d'élévation et, éventuellement, de la commande des moyens 3 de déplacement au sol du châssis lorsqu'elle est présente, est monté mobile entre une position inactive dans laquelle la ou les commandes 26 du pupitre 10 de commande, c'est-à-dire au moins la commande 26 des moyens 9 d'élévation ou au moins la commande 26 des moyens 9 d'élévation et la commande 26 des moyens 3 de déplacement au sol du châssis, sont désactivées ou inactives, et une position active dans laquelle la ou les commandes 26 du pupitre 10 de commande, c'est-à-dire, à nouveau, au moins la commande 26 des moyens 9 d'élévation ou au moins la commande 26 des moyens 9 d'élévation et la commande 26 des moyens 3 de déplacement au sol du châssis, sont activées ou actives. Par désactivées, on entend qu'une action de l'opérateur sur la ou les commandes est sans effet, l'ordre de commande n'étant pas transmis à l'unité 11 de pilotage. A l'inverse, par activées, on entend qu'une action de l'opération sur la ou les commandes est apte à être transmise à l'unité 11 de pilotage.

Cet organe 12 d'activation/inactivation est équipé de moyens 13 de rappel en position inactive et est apte à passer de la position inactive à la position active sous l'action d'une poussée exercée sur ledit organe 12 d'activation/inactivation à l'encontre des moyens 13 de rappel. Ces moyens 13 de rappel peuvent être formés par un ressort ou par tout autre moyen élastiquement déformable.

Dans les exemples représentés, l'organe 12 d'activation/inactivation est une pédale à pied portée par la plateforme 8. Cette pédale est disposée sur le plancher de la plateforme 8 de manière éloignée du pupitre 10 de commande qui lui est placé à hauteur des mains de l'opérateur.

L'opérateur peut ainsi actionner la pédale alors que ses mains sont utilisées à un travail en élévation. Cette pédale est équipée d'un indicateur 14 de la position active ou inactive de la pédale, les données de position dudit indicateur étant transmises à l'unité 11 de pilotage.

Cet indicateur 14 de la position active ou inactive peut être formé par un simple contacteur disposé sur la pédale ou par un transducteur apte à mesurer le déplacement de la pédale et à fournir une indication dudit mouvement de la pédale à l'unité de pilotage sous forme de signaux électriques.

Comme l'illustre la description ci-dessus, l'unité 11 de pilotage est donc apte à recevoir des données d'entrée qui peuvent notamment être soit des informations logiques de démarrage, d'arrêt, d'extinction, d'allumage, de levage, soit des mesures issues des capteurs et à émettre des données de sortie qui peuvent être des instructions de commande pour les actionneurs, des informations indicatives, voyants ou autre, ces données d'entrée et de sortie étant fonction du mode de fonctionnement de la nacelle.

Cette nacelle 1 comprend un mode de fonctionnement dit économique dans lequel, à l'état activé de l'organe 7 de mise sous tension et à l'état démarré du moteur, l'unité 11 de pilotage est configurée pour permettre d'arrêter le moteur 4 thermique de manière automatique, c'est-à-dire sans actionnement de l'organe 7 de mise sous tension, ledit arrêt étant appelé arrêt sous tension du moteur 4. Cet arrêt sous tension du moteur 4 thermique, c'est-à-dire avec l'organe 7 de mise sous tension restant activé, permet de conserver une alimentation au moins de l'unité 11 de pilotage.

Pour permettre l'arrêt sous tension du moteur 4 thermique dans ce mode de fonctionnement économique, il est nécessaire, lorsque ce mode de fonctionnement économique est un mode de fonctionnement activable/désactivable, que ce mode de fonctionnement soit activé. L'activation peut s'opérer de manière automatique après mise sous tension et avant ou après le premier démarrage du moteur. Elle peut également être commandée par l'opérateur à l'aide d'un bouton 34 situé au niveau du poste de commande inférieur 27.

Toutefois, cette activation/désactivation est fonction du niveau de charge de la batterie et le mode de fonctionnement économique peut être désactivé lorsque le niveau de charge de la batterie 15 fourni par l'indicateur 16 du niveau de charge est insuffisant.

Dans l'exemple représenté, ce mode économique ne peut être activé qu'en configuration travail de la nacelle. Dans ce mode de fonctionnement économique, l'unité de pilotage est donc configurée pour provoquer, dans des conditions préétablies, l'arrêt sous tension du moteur 4 thermique. Cette unité 11 de pilotage est également configurée pour, à l'état arrêté sous tension du moteur, provoquer, dans des conditions préétablies, un démarrage dit automatique du moteur, c'est-à-dire un démarrage du moteur 4 thermique sans actionnement du ou des organes 61, 62 d'actionnement du démarreur 5 lorsque le démarreur 5 comprend plusieurs organes d'actionnement comme cela est le cas dans l'exemple représenté.

Dans l'exemple représenté, l'unité 11 de pilotage est configurée pour commander le démarrage du moteur 4 thermique à l'aide de l'organe 12 d'activation/inactivation de la commande 26 des moyens 9 d'élévation, c'est-à-dire la pédale homme-mort.

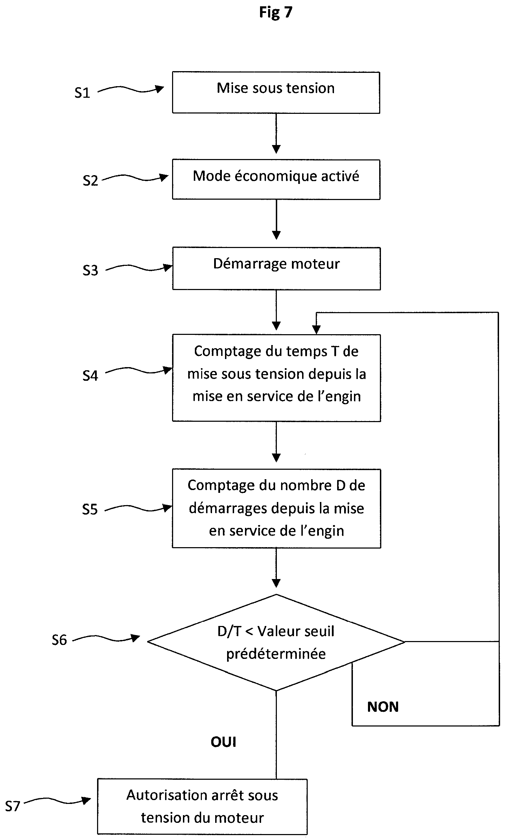

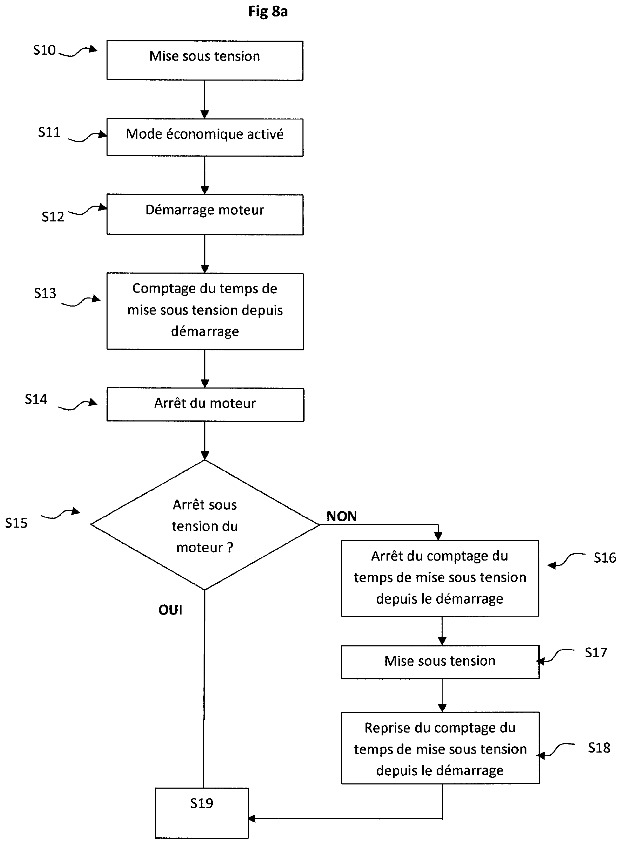

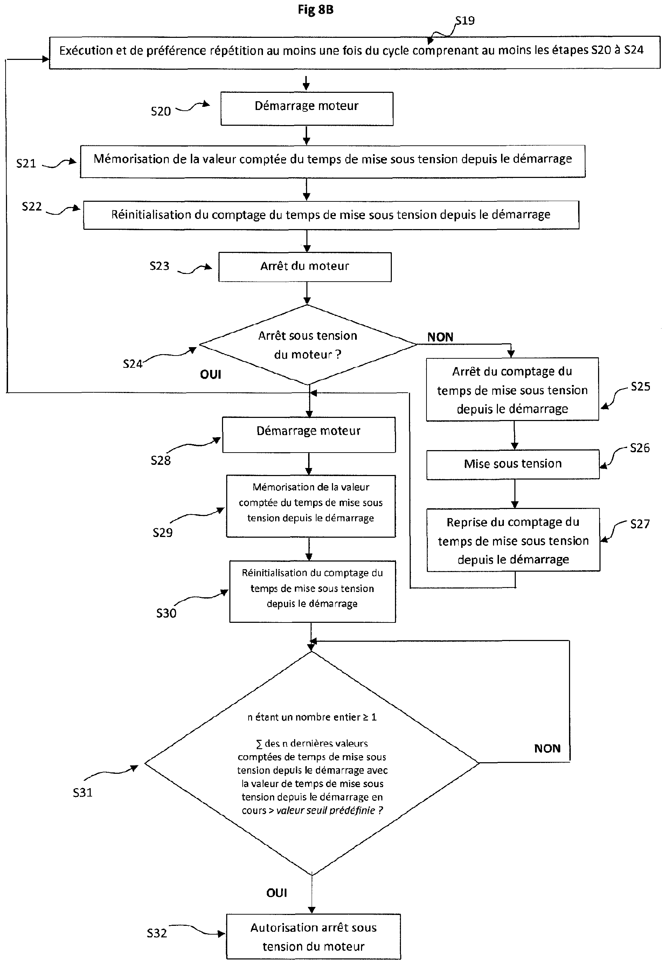

Pour permettre l'arrêt du moteur sous tension, il est nécessaire que l'arrêt du moteur soit autorisé comme l'illustrent les figures 7, 8a et 8b. A cet effet, la nacelle 1 comprend une mémoire 28 pour mémoriser des données relatives au nombre de démarrages du moteur 4 thermique de la nacelle. L'unité 11 de pilotage est configurée pour, en mode de fonctionnement économique de la nacelle, autoriser ou interdire l'arrêt sous tension du moteur 4 au moins en fonction desdites données mémorisées. L'information de démarrage peut être obtenue soit à l'aide d'un capteur ou d'une information de tension prise au niveau des bornes du générateur d'électricité encore appelé alternateur associé au moteur 4 thermique, soit à l'aide d'une information relative à la rotation de l'arbre moteur, cette information pouvant être obtenue à l'aide d'un capteur positionné au niveau de l'arbre moteur ou de l'arbre du générateur d'électricité. La mémoire 28 peut donc ainsi stocker une donnée D correspondant au nombre D de démarrages du moteur de la nacelle 1 depuis sa mise en service.

La nacelle comprend encore une mémoire 29 pour mémoriser des données relatives au temps T écoulé de mise sous tension de la nacelle 1 depuis sa mise en service. Cette mise sous tension de la nacelle 1 correspond à l'état actif de l'organe 7 de mise sous tension. L'unité 11 de pilotage est configurée pour, en mode de fonctionnement économique de la nacelle 1, autoriser ou interdire l'arrêt sous tension du moteur 4 au moins en fonction desdites données mémorisées. Pour obtenir une information relative au temps T écoulé de mise sous tension de la nacelle depuis sa mise en service, la nacelle comprend une horloge interne équipée d'une pile pour fonctionner de manière permanente. Une information de temps est apte à être fournie par l'horloge à l'unité 11 de pilotage. Cette unité de pilotage reçoit en parallèle une information relative à l'actionnement de l'organe 7 de mise sous tension, que ce soit dans le sens d'un passage de l'état actif à l'état inactif ou dans le sens d'un passage de l'état inactif à l'état actif. Il est ainsi possible à l'unité de pilotage de calculer, à partir des informations de temps et des informations relatives à l'actionnement de l'organe 7 de mise sous tension, le temps T de mise sous tension de l'engin depuis sa mise en service. En pratique, l'unité de pilotage est configurée pour : - calculer le nombre D de démarrages de la nacelle 1 sur le temps T écoulé de mise sous tension de l'engin 1 depuis sa mise en service, soit l'opération D/T
- comparer le résultat du calcul avec une valeur seuil prédéterminée mémorisée, et
- autoriser l'arrêt sous tension du moteur 4 au moins lorsque le résultat du calcul est inférieur à la valeur seuil prédéterminée mémorisée,
comme l'illustrent les étapes S1 à S7 de la figure 7. Ainsi, si le temps T de mise sous tension est de 1200 heures, que le nombre D de démarrages est de 6000, D/T est égal à 5, soit 5 démarrages par heure. Si la valeur seuil choisie correspondant à un nombre de démarrages par unité de temps est égal à 3, c'est-à-dire 3 démarrages par heure, alors la valeur calculée (5) est supérieure à la valeur seuil mémorisée (3) et l'arrêt sous tension du moteur n'est pas autorisé.

Les étapes S4 de comptage du temps T, S5 de comptage du nombre D de démarrages et l'étape S6 de comparaison de la valeur D/T avec une valeur seuil prédéterminée sont répétées jusqu'à ce que D/T soit inférieur à la valeur seuil prédéterminée pour autoriser l'arrêt sous tension du moteur.

La nacelle comprend encore une mémoire 31 pour mémoriser chaque valeur de temps relative au temps de mise sous tension écoulé entre deux démarrages successifs du moteur 4 thermique. L'unité 11 de pilotage est configurée pour :
- calculer la somme des n dernières valeurs de temps mémorisées avec la valeur de temps relative au temps de mise sous tension écoulé depuis le démarrage en cours,
- comparer ladite valeur calculée avec une valeur seuil prédéfinie et,
- autoriser l'arrêt sous tension du moteur 4 au moins en fonction du résultat de la comparaison,
n étant un nombre entier supérieur ou égal à 1.

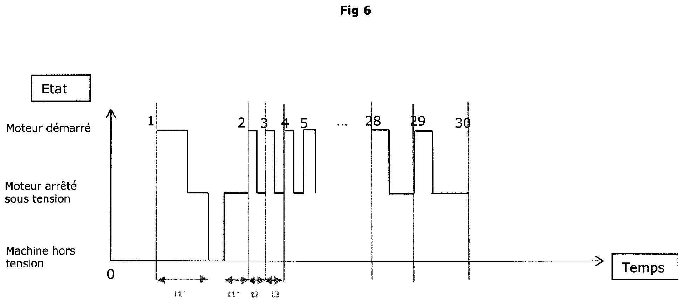

Un exemple de mise en oeuvre est décrit aux figures 6, 8a et 8b.

La figure 6 illustre les valeurs t1, t2, t3... tn susceptibles d'être mémorisées dans la mémoire 31. Ainsi, le chronogramme de la figure 6 illustre l'état (démarré/arrêté sous tension/arrêté hors tension) du moteur 4 en ordonnée et le temps en abscisse, les chiffres 1, 2, 3...à 30 illustrant à chaque fois un démarrage. Ainsi, à partir du démarrage n° 1, la nacelle est sous tension pendant une première période de temps t1'. Cette période de temps t1' comprend une période de temps pendant laquelle le moteur est démarré et une période temps pendant laquelle le moteur est arrêté sous tension. La valeur comptée à l'issue de cette première période de temps est mémorisée de manière provisoire. L'organe 7 de mise sous tension est amené à l'état inactif et le temps n'est alors plus compté. Dès que l'organe de mise sous tension est de nouveau à l'état actif, le comptage du temps est repris sans interruption jusqu'au démarrage n° 2 à la figure 6 car l'engin est sous tension pendant toute cette période t1". La première valeur de temps compté mémorisé dans la mémoire 31 est donc la valeur de temps correspondant à la somme des période t1' et t1", t1" correspondant au temps qui s'est écoulé entre la mise sous tension suivant le démarrage n° 1 et le démarrage n° 2. Cette valeur de temps correspondant à la somme t1' et t1" est appelée t1.

Après le démarrage numéroté 2 à la figure 6, le moteur fonctionne pendant un certain temps puis est arrêté sous tension pendant un certain temps jusqu'à un démarrage numéroté 3 à la figure 6. Cette période de fonctionnement sous tension qui s'écoule entre le démarrage numéro 2 et numéro 3 est représentée par t2 à la figure 6. La durée t2 de cette période de temps est mémorisée dans la mémoire 31 et ajoutée à la valeur de t1 correspondant à la somme de t1' et t1".

On procède de manière similaire pour les démarrages suivants. A chaque démarrage, on réinitialise le comptage pour ne calculer que le temps de mise sous tension qui s'écoule entre deux démarrages successifs. Ainsi, les valeurs de temps écoulé sous tension de la nacelle entre deux démarrages successifs sont mémorisées. Cette mémorisation s'opère uniquement pour les n dernières valeurs comptées, n étant un nombre entier supérieur à 1. Ainsi, dans l'exemple représenté à la figure 6, n est égal à 30. Au démarrage 31, la valeur du temps t30 correspondant au temps de fonctionnement sous tension entre les démarrages 30 et 31 est mémorisée et la valeur t1 est effacée au démarrage n° 32. La mémorisation s'opère donc de manière glissante pour ne conserver que les n dernières valeurs mémorisées et la valeur de temps de mise sous tension en cours de comptage et correspondant au temps de mise sous tension de l'engin écoulé depuis le dernier démarrage en cours.

La somme des n valeurs de temps t1 + t2 + ... t30 ainsi calculée ajoutée à la valeur de temps en cours de comptage est comparée à une valeur de temps seuil prédéterminée. Si la valeur calculée est supérieure à la valeur de temps seuil prédéterminée, l'arrêt sous tension du moteur est autorisé.

Ainsi, dans l'exemple représenté, si la somme de t1 à t30 en sus de la valeur de temps en cours de comptage est inférieure à une heure qui correspond à la valeur seuil choisie, alors l'arrêt sous tension du moteur n'est pas autorisé. A nouveau, une horloge interne est utilisée pour le comptage du temps de fonctionnement sous tension entre deux démarrages successifs. La nacelle comprend donc une horloge interne pour l'aide au comptage du temps de fonctionnement sous tension entre deux démarrages successifs. L'information temps issue de l'horloge est adressée à l'unité de pilotage en parallèle des informations relatives au démarrage du moteur et à l'actionnement de l'organe 7 de mise sous tension.

Les étapes S10 à S32 illustrent, sous forme de logigramme, un exemple de ce processus. Ainsi à l'étape S10, la nacelle est mise sous tension par actionnement de l'organe 7 de mise sous tension et passage en position active dudit organe.

A l'étape S11, le mode économique est activé par défaut ou par actionnement d'un bouton par le conducteur de la nacelle.

A l'étape S12, le conducteur démarre le moteur à l'aide du bouton 62 de démarrage.

A l'étape S13, le comptage du temps de mise sous tension, c'est-à-dire de fonctionnement sous tension de la nacelle, démarre.

A l'étape S14, le moteur est arrêté. Si l'arrêt n'est pas un arrêt sous tension du moteur, c'est-à-dire que l'organe 7 de mise sous tension a été actionné pour passer en position inactive, alors on passe aux étapes S16 à S18.

Le comptage est arrêté à l'étape S16 jusqu'à une nouvelle mise sous tension qui a lieu à l'étape S17. Cette mise sous tension de la nacelle s'opère par actionnement de l'organe 7 de mise sous tension qui passe en position active de mise sous tension.

Le comptage du temps de mise sous tension est alors repris à l'étape S18 pour passer à l'étape S19. Si l'arrêt du moteur s'est opéré sous tension à l'étape S15, alors on passe directement à l'étape S19.

A partir de l'étape S19, on exécute les étapes S20 à S24 au moins une fois.

Ainsi, à l'étape S20, on démarre le moteur et à l'étape S21 la valeur comptée du temps de mise sous tension depuis le démarrage opéré à l'étape S12 ou à l'étape S20 du cycle antérieur lorsqu'un cycle d'étapes entre S20 et S24 a d'ores et déjà été exécuté est mémorisée dans la mémoire 31.

A l'étape S22, le comptage du temps de mise sous tension est réinitialisé pour permettre le comptage d'une nouvelle valeur de temps.

A l'étape S23, le moteur est arrêté.

A nouveau, à l'étape S24, il est vérifié si l'arrêt du moteur opéré est un arrêt sous tension. Si l'arrêt est un arrêt hors tension, le comptage est arrêté à l'étape S25.

Une fois la mise sous tension opérée à l'étape S26, le comptage est repris à l'étape S27.

Ce cycle des étapes S20 à S24 avec éventuellement les étapes S25 à S27 selon le type d'arrêt peut être répété un certain nombre de fois.

A l'étape S28, un démarrage moteur est opéré et à l'étape S29, la valeur comptée du temps de mise sous tension de la nacelle depuis le démarrage précédent le démarrage opéré à l'étape S28 est mémorisée.

A l'étape S30, le comptage du temps de mise sous tension est réinitialisé, c'est-à-dire remis à zéro pour effectuer un nouveau comptage à partir du démarrage venant de s'opérer.

Un test est ensuite réalisé à l'étape S31. Lors de ce test, les n dernières valeurs comptées du temps de mise sous tension sont ajoutées à la valeur comptée du temps de mise sous tension depuis le démarrage en cours et le résultat de cette opération est comparé à une valeur seuil prédéfinie. Ainsi, par exemple, si la valeur du temps calculée est supérieure à la valeur prédéterminée, alors l'arrêt sous tension du moteur est autorisé. Sinon, elle est interdite.

Il doit être noté que les conditions :
- D/T inférieur à une valeur seuil prédéterminée et
- somme des n dernières valeurs comptées de temps de mise sous tension depuis le démarrage avec la valeur de temps de mise sous tension depuis le démarrage en cours supérieure à une valeur seuil prédéfinie sont généralement des conditions cumulatives. Ainsi, l'arrêt du moteur sous tension n'est autorisé que si les deux conditions sont remplies.

Dans ce mode de fonctionnement économique, une fois l'arrêt sous tension du moteur autorisé, l'unité de pilotage est configurée pour, dans des conditions prédéfinies, commander l'arrêt dudit moteur de manière automatique, c'est-à-dire sans actionnement de l'organe 7 de mise sous tension par l'opérateur.

La nacelle comprend donc des moyens d'établissement d'une requête d'activation de l'arrêt sous tension du moteur thermique à partir de critères de sollicitation du véhicule, et l'unité 11 de pilotage est configurée pour commander cet arrêt sous tension lorsque la requête est établie. Ces critères de sollicitation sont choisis, comme l'illustre la description ci-dessous, dans le groupe non exhaustif comprenant au moins :
- un critère représentatif du niveau de charge de la batterie,
- un critère représentatif de la désactivation de l'organe 18 de commande de démarrage à froid,
- un critère représentatif de la désactivation du générateur 20 d'électricité,
- un critère représentatif de la nacelle en configuration travail,
- un critère représentatif de la présence d'un opérateur sur la plateforme,
- un critère représentatif de la position de l'organe 12 d'activation/inactivation,

Ces critères s'appliquent ici de manière cumulative. Toutefois, le nombre de critères peut être réduit en fonction du niveau de sécurité ou de confort souhaité. Ainsi, le critère relatif à la désactivation de l'organe 18 de commande de démarrage à froid et le critère relatif à la désactivation du générateur 20 d'électricité peuvent être supprimés.

L'unité de pilotage est donc configurée pour, en configuration travail de la nacelle, à l'état activé du mode de fonctionnement économique, commander l'arrêt sous tension du moteur 4 thermique au moins en fonction des données fournies par l'indicateur 14 de position de l'organe 12 d'activation/inactivation, l'unité de pilotage étant configurée pour commander l'arrêt sous tension du moteur au moins si l'organe d'activation/inactivation est en position inactive.

De même, l'unité de pilotage est configurée pour, en configuration travail de la nacelle, à l'état activé du mode de fonctionnement économique, commander l'arrêt sous tension du moteur 4 thermique au moins en fonction de l'état présent ou absent déterminé par le module 17 de détermination de présence, l'unité de pilotage étant configurée pour commander l'arrêt sous tension du moteur au moins si l'état présent est détecté. Ce module 17 de détermination de présence disposé au niveau de l'unité de pilotage est configuré pour vérifier que les dernières instructions reçues pour la commande du moteur ou du bras de levage émanent du pupitre de commande.

Optionnellement, l'unité de pilotage est configurée pour, en configuration travail de la nacelle, à l'état activé du mode de fonctionnement économique, commander l'arrêt sous tension du moteur 4 thermique en fonction de l'état activé/désactivé de l'organe 18 de commande de démarrage à froid du moteur thermique, l'unité de pilotage étant configurée pour commander l'arrêt sous tension du moteur 4 thermique au moins si l'organe 18 de commande est à l'état désactivé.

Enfin, à nouveau optionnellement, l'unité de pilotage est configurée pour, en configuration travail de la nacelle, à l'état activé du mode de fonctionnement économique, commander l'arrêt sous tension du moteur 4 thermique au moins en fonction des données fournies par le module 21 de détermination de l'état activé/désactivé du générateur 20 d'électricité, l'unité de pilotage étant configurée pour commander l'arrêt sous tension au moins si le générateur 20 d'électricité est à l'état désactivé, c'est-à-dire inactif.

Ainsi :
- si le niveau de charge de la batterie est suffisant,
- si la commande de démarrage à froid est désactivée,
- si la génératrice est désactivée,
- si la configuration travail est activée,
- si la présence sur la plateforme est confirmée,
- et si l'organe 12 d'activation/inactivation est en position inactive,
alors l'arrêt moteur sous tension est commandé par l'unité de pilotage.

Une fois l'arrêt moteur sous tension obtenu, dans ce mode de fonctionnement économique, un démarrage du moteur thermique pourra être obtenu par activation de l'organe 12 d'activation/inactivation de la commande des moyens 9 d'élévation sans actionnement des organes 61, 62 d'actionnement du démarreur 5.

En pratique, le conducteur d'un tel engin peut donc, une fois qu'il a pris place sur la plateforme de la nacelle, gérer la fonctionnalité d'arrêt sous tension et de démarrage sous tension du moteur à l'aide uniquement de l'organe 12 d'activation/inactivation de la commande 26 des moyens d'élévation, toutes les conditions prédéfinies ci-dessus permettant d'autoriser cet arrêt et ce démarrage dans des conditions optimales pour un bon fonctionnement de la nacelle sans usure prématurée du moteur ou du démarreur.

## Revendications

1. Engin (1) roulant comprenant
- un châssis (2), un moteur (4) thermique porté par ledit châssis (2), un démarreur (5) dudit moteur et au moins un organe (61, 62) d'actionnement dudit démarreur (5),
- une unité (11) de pilotage,
- un organe (7) de mise sous tension au moins de l'unité (11) de pilotage, ledit organe (7) de mise sous tension étant apte à passer d'un état actif à un état inactif et inversement,
ledit engin (1) comprenant un mode de fonctionnement dit économique dans lequel, à l'état activé de l'organe (7) de mise sous tension et à l'état démarré du moteur (4), l'unité (11) de pilotage est configurée pour permettre d'arrêter le moteur (4) de manière automatique, c'est-à-dire sans actionnement de l'organe (7) de mise sous tension, ledit arrêt étant appelé arrêt sous tension du moteur (4),
l'engin (1) roulant comprenant encore une mémoire (28) pour mémoriser des données relatives au nombre de démarrages du moteur (4) thermique de l'engin et l'unité (11) de pilotage étant configurée, pour en mode de fonctionnement économique de l'engin (1), autoriser ou interdire l'arrêt sous tension du moteur (4) au moins en fonction desdites données mémorisées,
**caractérisé en ce que** l'engin (1) roulant comprend une mémoire (31) pour mémoriser chaque valeur de temps relative au temps de mise sous tension écoulé entre deux démarrages successifs du moteur (4) thermique et **en ce que** l'unité (11) de pilotage est configurée pour, n étant un nombre entier supérieur ou égal 1,
- calculer la somme des n dernières valeurs de temps mémorisées avec la valeur de temps relative au temps de mise sous tension écoulé depuis le démarrage en cours,
- comparer ladite valeur calculée avec une valeur seuil prédéfinie et,
- autoriser l'arrêt sous tension du moteur (4) au moins en fonction du résultat de la comparaison.

2. Engin (1) roulant selon la revendication 1, **caractérisé en ce qu'**en mode de fonctionnement économique, l'unité (11) de pilotage est configurée pour, à l'état arrêté sous tension du moteur (4), démarrer le moteur (4) sans actionnement du au moins un organe (61, 62) d'actionnement du démarreur (5).

3. Engin (1) roulant selon l'une des revendications 1 ou 2, **caractérisé en ce que** l'engin (1) roulant comprend une mémoire (29) pour mémoriser des données relatives au temps T écoulé de mise sous tension de l'engin (1) depuis sa mise en service, ladite mise sous tension de l'engin correspondant à l'état actif de l'organe (7) de mise sous tension, et **en ce que** l'unité (11) de pilotage est configurée pour, en mode de fonctionnement économique de l'engin (1), autoriser ou interdire l'arrêt sous tension du moteur (4) au moins en fonction desdites données mémorisées

4. Engin (1) roulant selon la revendication 3, **caractérisé en ce que** l'unité (11) de pilotage est configurée pour :
- calculer le nombre D de démarrages de l'engin (1) depuis sa mise en service sur le temps T écoulé de mise sous tension de l'engin (1) depuis sa mise en service,
- comparer le résultat du calcul avec une valeur seuil prédéterminée mémorisée, et
- autoriser l'arrêt sous tension du moteur (4) au moins lorsque le résultat du calcul est inférieur à la valeur seuil prédéterminée mémorisée.

5. Engin (1) roulant selon l'une des revendications 1 à 4, **caractérisé en ce que** l'organe (7) de mise sous tension de l'engin est une clé disposée sur le châssis (2), cette clé étant une clé rotative apte à passer par rotation d'un état inactif à un état actif et inversement.

6. Engin (1) roulant selon l'une des revendications 1 à 5, **caractérisé en ce que** le châssis (2) est équipé d'un poste (27) de commande et **en ce que** le ou au moins l'un des organes (61, 62) d'actionnement du démarreur (5) est formé par un bouton de démarrage équipant ledit poste (27).

7. Engin (1) roulant selon l'une des revendications 1 à 6, **caractérisé en ce que** l'engin (1) est une nacelle (1) élévatrice comprenant :
- outre le châssis (2) portant ledit moteur (4) thermique,
- une plateforme (8),
- des moyens (9) d'élévation de la plateforme (8) par rapport au châssis (2), lesdits moyens (9) d'élévation comprenant au moins un bras (91) de levage télescopique ou non télescopique disposé entre une zone (30) de raccordement à la plateforme (8) et le châssis (2) et monté mobile à l'aide du moteur (4) thermique entre une position haute et une position basse,
- un pupitre (10) de commande porté par ladite plateforme (8) et équipé au moins d'une commande (26) des moyens (9) d'élévation,
- un organe (12) d'activation/inactivation d'au moins la commande (26) des moyens (9) d'élévation, ledit organe (12) d'activation/inactivation étant monté mobile entre une position inactive, dans laquelle au moins la commande (26) des moyens (9) d'élévation est désactivée et une position active dans laquelle au moins la commande (26) des moyens (9) d'élévation est activée, ledit organe (12) d'activation/inactivation étant équipé de moyens (13) de rappel en position inactive, et étant apte à passer de la position inactive à la position active sous l'action d'une poussée exercée sur ledit organe (12) d'activation/inactivation à l'encontre des moyens (13) de rappel, et
- un indicateur (14) de la position active/inactive de l'organe (12) d'activation/inactivation
- **en ce que** l'unité (11) de pilotage est configurée pour commander les moyens (9) d'élévation en fonction au moins des données fournies par ledit pupitre (10) de commande,
- **en ce que** ladite nacelle (1) présente deux configurations à savoir une configuration transport et une configuration travail, ladite nacelle (1) étant en configuration transport en position basse du bras (91) et rentrée du bras (91) dans le cas d'un bras télescopique, et
**en ce que**, en configuration travail de la nacelle (1), et en mode de fonctionnement économique, l'unité (11) de pilotage est configurée pour, à l'état autorisé de l'arrêt sous tension du moteur (4), commander l'arrêt sous tension du moteur (4) thermique au moins en fonction des données fournies par ledit indicateur (14) de la position active/inactive de l'organe (12) d'activation/inactivation d'au moins la commande (26) des moyens (9) d'élévation.

8. Engin (1) roulant selon la revendication 7, **caractérisé en ce que**, en configuration travail de la nacelle (1) et en mode de fonctionnement économique, à l'état arrêté sous tension du moteur (4) thermique, l'unité (11) de pilotage est configurée pour commander le démarrage du moteur (4) thermique à l'aide de l'organe (12) d'activation/inactivation d'au moins la commande (26) des moyens (9) d'élévation, par passage de l'organe (12) d'activation/inactivation de la position inactive à la position active, sans actionnement du ou des organes (61, 62) d'actionnement du démarreur (5).

9. Engin (1) roulant selon l'une des revendications 7 ou 8, **caractérisé en ce que** l'unité (11) de pilotage comprend un module (17) de détermination de présence configuré pour déterminer l'état présent ou absent d'une personne sur la plateforme (8) en fonction de données fournies par le pupitre (10) de commande et **en ce que**, en configuration travail de la nacelle (1), en mode de fonctionnement économique, l'unité (11) de pilotage est configurée pour, à l'état autorisé de l'arrêt sous tension du moteur (4), commander l'arrêt sous tension du moteur (4) thermique au moins en fonction dudit état déterminé par le module (17) de détermination de présence.

10. Engin (1) roulant selon l'une des revendications 1 à 9, **caractérisé en ce que** l'engin (1) comprend un organe (18) activable/désactivable de commande de démarrage à froid du moteur (4) thermique et un module (19) de détermination de l'état activé/désactivé dudit organe (18) de commande, cet organe (18) de commande étant activable par actionnement manuel, et désactivable de manière automatique, et **en ce que**, en mode de fonctionnement économique, l'unité (11) de pilotage est configurée pour, à l'état autorisé de l'arrêt sous tension du moteur (4), commander l'arrêt sous tension du moteur (4) thermique au moins en fonction de l'état activé/désactivé dudit organe (18) de commande de démarrage à froid déterminé par ledit module (19).

11. Engin (1) roulant selon l'une des revendications 1 à 10, **caractérisé en ce que** l'engin (1) comprend au moins un générateur (20) d'électricité, et un module (21) de détermination de l'état activé/désactivé dudit générateur (20) d'électricité et **en ce que**, en mode de fonctionnement économique, l'unité (11) de pilotage est configurée pour, à l'état autorisé de l'arrêt sous tension du moteur (4), commander l'arrêt sous tension du moteur (4) thermique au moins en fonction de l'état activé/désactivé du générateur (20) d'électricité déterminé par ledit module (21).

12. Engin (1) roulant selon l'une des revendications 1 à 11, **caractérisé en ce que** le mode de fonctionnement économique est un mode activable /désactivable et **en ce que** l'engin (1) comprend un organe (34) d'activation et/ou de désactivation dudit mode.

13. Procédé d'optimisation des conditions d'arrêt d'un engin (14) roulant comprenant
- un châssis (2), un moteur (4) thermique porté par ledit châssis (2), un démarreur (5) dudit moteur et au moins un organe (61, 62) d'actionnement dudit démarreur (5),
- une unité (11) de pilotage,
- un organe (7) de mise sous tension au moins de l'unité (11) de pilotage, ledit organe (7) de mise sous tension étant apte à passer d'un état actif à un état inactif et inversement,
ledit engin (1) comprenant, à l'état activé de l'organe (7) de mise sous tension, et à l'état démarré du moteur (4), un mode de fonctionnement dit économique dans lequel l'unité (11) de pilotage est configurée pour permettre d'arrêter le moteur (4) de manière automatique, c'est-à-dire sans actionnement de l'organe (7) de mise sous tension, ledit arrêt étant appelé arrêt sous tension du moteur (4), ledit procédé comprenant une étape de mémorisation des données relatives au nombre de démarrages du moteur (4) de l'engin (1), et l'arrêt sous tension du moteur (4) étant autorisé au moins en fonction desdites données mémorisées, **caractérisé en ce que** le procédé comprend une étape de mémorisation de chaque valeur de temps relative au temps de mise sous tension écoulé entre deux démarrages successifs du moteur thermique, une étape de calcul de la somme des n dernières valeurs de temps mémorisées avec la valeur de temps relative au temps de mise sous tension écoulé depuis le démarrage en cours, n étant un nombre entier supérieur ou égal à 1, une étape de comparaison de ladite valeur calculée avec une valeur seuil prédéfinie, l'arrêt de tension du moteur étant autorisée au moins en fonction des résultats de la comparaison.

## Patentansprüche

1. Radfahrzeug (1), umfassend
- ein Fahrgestell (2), einen von dem Fahrgestell (2) getragenen Verbrennungsmotor (4), einen Starter (5) des Motors und mindestens ein Betätigungsorgan (61, 62) des Starters (5),
- eine Steuereinheit (11),
- ein Organ (7) zum Unterspannungsetzen von mindestens der Steuereinheit (11), wobei das Organ (7) zum Unterspannungsetzen imstande ist, aus einem aktiven Zustand in einen inaktiven Zustand zu wechseln und umgekehrt,
wobei das Fahrzeug (1) einen wirtschaftlichen Betriebsmodus umfasst, in dem im aktivierten Zustand des Organs (7) zum Unterspannungsetzen und im gestarteten Zustand des Motors (4) die Steuereinheit (11) ausgelegt ist, um das automatische Stoppen des Motors (4) zu gestatten, das heißt, ohne Betätigung des Organs (7) zum Unterspannungsetzen, wobei das Stoppen als Stoppen des Motors (4) unter Spannung bezeichnet wird,
wobei das Radfahrzeug (1) einen Speicher (28) umfasst, um Daten zu speichern, die sich auf die Anzahl von Starts des Verbrennungsmotors (4) des Fahrzeugs beziehen und die Steuereinheit (11) ausgelegt ist, um im wirtschaftlichen Betriebsmodus des Fahrzeugs (1) das Stoppen des Motors (4) unter Spannung mindestens in Abhängigkeit von den gespeicherten Daten zu gestatten oder zu untersagen,
**dadurch gekennzeichnet, dass** das Radfahrzeug (1) einen Speicher (31) umfasst, um jeden Zeitwert zu speichern, der sich auf die Zeit des Unterspannungsetzens bezieht, die zwischen zwei aufeinanderfolgenden Starts des Verbrennungsmotors (4) vergangen ist und dass die Steuereinheit (11) ausgelegt ist, um, wobei n eine Ganzzahl größer oder gleich 1 ist,
- die Summe der n letzten Zeitwerte zu berechnen, die mit dem Zeitwert gespeichert sind, der sich auf die Zeit des Unterspannungsetzens bezieht, der seit dem laufenden Start vergangen ist,
- den berechneten Wert mit einem vorher festgelegten Grenzwert zu vergleichen, und
- das Stoppen des Motors (4) unter Spannung mindestens in Abhängigkeit vom Ergebnis des Vergleichs zu gestatten.

2. Radfahrzeug (1) nach Anspruch 1, **dadurch gekennzeichnet, dass** die Steuereinheit (11) im wirtschaftlichen Betriebsmodus ausgelegt ist, um im unter Spannung angehaltenen Zustand des Motors (4) den Motor (4) ohne Betätigung des mindestens einen Betätigungsorgans (61, 62) des Starters (5) zu starten.

3. Radfahrzeug (1) nach einem der Ansprüche 1 oder 2, **dadurch gekennzeichnet, dass** das Radfahrzeug (1) einen Speicher (29) umfasst, um Daten zu speichern, die sich auf die abgelaufene Zeit T des Unterspannungsetzens des Fahrzeugs (1) seit seiner Inbetriebnahme beziehen, wobei das Unterspannungsetzen des Fahrzeugs dem aktiven Zustand des Organs (7) zum Unterspannungsetzen entspricht, und dass die Steuereinheit (11) ausgelegt ist, um im wirtschaftlichen Betriebsmodus des Fahrzeugs (1) das Stoppen des Motors (4) unter Spannung mindestens in Abhängigkeit von den gespeicherten Daten zu gestatten oder zu untersagen.

4. Radfahrzeug (1) nach Anspruch 3, **dadurch gekennzeichnet, dass** die Steuereinheit (11) ausgelegt ist, um:
- die Anzahl D von Starts des Fahrzeugs (1) seit seiner Inbetriebnahme über die abgelaufene Zeit T des Unterspannungsetzens des Fahrzeugs (1) seit seiner Inbetriebnahme zu berechnen,
- das Ergebnis der Berechnung mit einem gespeicherten vorher festgelegten Grenzwert zu vergleichen, und
- das Stoppen des Motors (4) unter Spannung mindestens dann zu gestatten, wenn das Ergebnis der Berechnung unter dem gespeicherten vorher festgelegten Grenzwert liegt.

5. Radfahrzeug (1) nach einem der Ansprüche 1 bis 4, **dadurch gekennzeichnet, dass** das Organ (7) zum Unterspannungsetzen des Fahrzeugs ein Schlüssel ist, der auf dem Fahrgestell (2) angeordnet ist, wobei dieser Schlüssel ein rotatorischer Schlüssel ist, der imstande ist, durch Rotation aus einem inaktiven Zustand in einen aktiven Zustand zu wechseln und umgekehrt.

6. Radfahrzeug (1) nach einem der Ansprüche 1 bis 5, **dadurch gekennzeichnet, dass** das Fahrgestell (2) mit einem Steuerposten (27) ausgestattet ist und dass das oder mindestens eins von den Betätigungsorganen (61, 62) des Starters (5) von einem Starterknopf gebildet ist, der den Posten (27) ausstattet.

7. Radfahrzeug (1) nach einem der Ansprüche 1 bis 6, **dadurch gekennzeichnet, dass** das Fahrzeug (1) eine Hubarbeitsbühne (1) ist, die umfasst:
- neben dem Fahrgestell (2), das den Verbrennungsmotor (4) trägt,
- eine Plattform (8),
- Hubmittel (9) der Plattform (8) im Verhältnis zum Fahrgestell (2), wobei die Hubmittel (9) mindestens einen teleskopischen oder nicht teleskopischen Hubarm (91) umfassen, der zwischen einer Verbindungszone (30) mit der Plattform (8) und dem Fahrgestell (2) angeordnet und mit Hilfe des Verbrennungsmotors (4) zwischen einer hohen Position und einer niedrigen Position beweglich angebracht ist,
- ein Steuerpult (10), das von der Plattform (8) getragen wird und mit mindestens einer Steuerung (26) der Hubmittel (9) ausgestattet ist,
- ein Aktivierungs-/Deaktivierungsorgan (12) von mindestens der Steuerung (26) der Hubmittel (9), wobei das Aktivierungs-/Deaktivierungsorgan (12) zwischen einer inaktiven Position, in der mindestens die Steuerung (26) der Hubmittel (9) deaktiviert ist, und einer aktiven Position, in welcher mindestens die Steuerung (26) der Hubmittel (9) aktiviert ist, beweglich angebracht ist, wobei das Aktivierungs-/Deaktivierungsorgan (12) mit Rückstellmitteln (13) in die inaktive Position ausgestattet ist und imstande ist, aus der inaktiven Position in die aktive Position unter der Wirkung eines Drucks, der auf das Aktivierungs-/Deaktivierungsorgan (12) ausgeübt wird, gegen die Rückstellmittel (13) zu wechseln, und
- einen Indikator (14) der aktiven/inaktiven Position des Aktivierungs-/Deaktivierungsorgans (12),
- dass die Steuereinheit (11) zum Steuern der Hubmittel (9) in Abhängigkeit von mindestens den vom Steuerpult (10) bereitgestellten Daten ausgelegt ist,
- dass die Arbeitsbühne (1) zwei Konfigurationen aufweist, nämlich eine Transportkonfiguration und eine Arbeitskonfiguration, wobei die Arbeitsbühne (1) in Transportkonfiguration in niedriger Position des Arms (91) und in eingezogener Position des Arms (91) im Fall eines Teleskoparms ist, und
dass, in Arbeitskonfiguration der Arbeitsbühne (1) und im wirtschaftlichen Betriebsmodus die Steuereinheit (11) ausgelegt ist, um im genehmigten Zustand des Stoppens des Motors (4) unter Spannung das Stoppen unter Spannung des Verbrennungsmotor (4) mindestens in Abhängigkeit von den Daten zu befehlen, die von dem Indikator (14) der aktiven/inaktiven Position des Aktivierungs-/Deaktivierungsorgans (12) von mindestens der Steuerung (26) der Hubmittel (9) bereitgestellt werden.

8. Radfahrzeug (1) nach Anspruch 7, **dadurch gekennzeichnet, dass** in Arbeitskonfiguration der Arbeitsbühne (1) und im wirtschaftlichen Betriebsmodus im unter Spannung angehaltenen Zustand des Verbrennungsmotors (4) die Steuereinheit (11) ausgelegt ist, um das Starten des Verbrennungsmotors (4) mit Hilfe des Aktivierungs-/Deaktivierungsorgans (12) von mindestens der Steuerung (26) der Hubmittel (9) durch Wechseln des Aktivierungs-/Deaktivierungsorgans (12) aus der inaktiven Position in die aktive Position ohne Betätigung des oder der Betätigungsorgane (61, 62) des Starters (5) zu befehlen.

9. Radfahrzeug (1) nach einem der Ansprüche 7 oder 8, **dadurch gekennzeichnet, dass** die Steuereinheit (11) ein Anwesenheitsbestimmungsmodul (17) umfasst, das ausgelegt ist, um den anwesenden oder abwesenden Zustand einer Person auf der Plattform (8) in Abhängigkeit von Daten zu bestimmen, die von dem Steuerpult (10) bereitgestellt werden, und dass die Steuereinheit (11) in Arbeitskonfiguration der Arbeitsbühne (1) im wirtschaftlichen Betriebsmodus ausgelegt ist, um im genehmigten Zustand des Stoppens des Motors (4) unter Spannung das Stoppen des Verbrennungsmotors (4) unter Spannung mindestens in Abhängigkeit von dem vom Anwesenheitsbestimmungsmodul (17) bestimmten Zustand zu befehlen.

10. Radfahrzeug (1) nach einem der Ansprüche 1 bis 9, **dadurch gekennzeichnet, dass** das Fahrzeug (1) ein aktivierbares/deaktivierbares Kaltstartsteuerungsorgan (18) des Verbrennungsmotors (4) und ein Modul (19) zur Bestimmung des aktivierten/deaktivierten Zustands des Steuerungsorgans (18) umfasst, wobei dieses Steuerungsorgan (18) durch manuelle Betätigung aktivierbar und automatisch deaktivierbar ist und dass die Steuereinheit (11) im wirtschaftlichen Betriebsmodus ausgelegt ist, um im genehmigten Zustand des Stoppens des Motors (4) unter Spannung das Stoppen des Verbrennungsmotors (4) unter Spannung mindestens in Abhängigkeit von dem vom Modul (19) bestimmten aktivierten/deaktivierten Zustand des Kaltstartsteuerungsorgans (18) zu befehlen.

11. Radfahrzeug (1) nach einem der Ansprüche 1 bis 10, **dadurch gekennzeichnet, dass** das Fahrzeug (1) mindestens einen Stromerzeuger (20) und ein Modul (21) zur Bestimmung des aktivierten/deaktivierten Zustands des Stromerzeugers (20) umfasst und dass die Steuereinheit (11) im wirtschaftlichen Betriebsmodus ausgelegt ist, um im genehmigten Zustand des Stoppens des Motors (4) unter Spannung das Stoppen des Verbrennungsmotors (4) unter Spannung mindestens in Abhängigkeit von dem vom Modul (21) bestimmten aktivierten/deaktivierten Zustand des Stromerzeugers (20) zu befehlen.

12. Radfahrzeug (1) nach einem der Ansprüche 1 bis 11, **dadurch gekennzeichnet, dass** der wirtschaftliche Betriebsmodus ein aktivierbarer/deaktivierbarer Modus ist und dass das Fahrzeug (1) ein Aktivierungs- und/oder Deaktivierungsorgan (34) des Modus umfasst.

13. Verfahren zur Optimierung der Bedingungen des Stoppens eines Radfahrzeugs (14), umfassend
- ein Fahrgestell (2), einen von dem Fahrgestell (2) getragenen Verbrennungsmotor (4), einen Starter (5) des Motors und mindestens ein Betätigungsorgan (61, 62) des Starters (5),
- eine Steuereinheit (11),
- ein Organ (7) zum Unterspannungsetzen von mindestens der Steuereinheit (11), wobei das Organ (7) zum Unterspannungsetzen imstande ist, aus einem aktiven Zustand in einen inaktiven Zustand zu wechseln und umgekehrt,
wobei das Fahrzeug (1) im aktivierten Zustand des Organs (7) zum Unterspannungsetzen und im gestarteten Zustand des Motors (4) einen wirtschaftlichen Betriebsmodus umfasst, in dem die Steuereinheit (11) ausgelegt ist, um das automatische Stoppen des Motors (4) zu gestatten, das heißt, ohne Betätigung des Organs (7) zum Unterspannungsetzen, wobei das Stoppen als Stoppen des Motors (4) unter Spannung bezeichnet wird, wobei das Verfahren einen Schritt des Speicherns der Daten umfasst, die sich auf die Anzahl von Starts des Motors (4) des Fahrzeugs (1) beziehen und das Stoppen des Motors (4) unter Spannung mindestens in Abhängigkeit von den gespeicherten Daten gestattet wird, **dadurch gekennzeichnet, dass** das Verfahren einen Schritt des Speicherns jedes Zeitwerts, der sich auf die Zeit des Unterspannungsetzens bezieht, die zwischen zwei aufeinanderfolgenden Starts des Verbrennungsmotors vergangen ist, einen Schritt zur Berechnung der Summe der n letzten Zeitwerte, die mit dem Zeitwert gespeichert werden, der sich auf die Zeit des Unterspannungsetzens bezieht, der seit dem laufenden Start vergangen ist, wobei n eine Ganzzahl größer oder gleich 1 ist, einen Schritt des Vergleichens des berechneten Werts mit einem vorher festgelegten Grenzwert umfasst, wobei das Stoppen der Spannung des Motors mindestens in Abhängigkeit von den Ergebnissen des Vergleichs gestattet wird.

## Claims

1. A wheeled vehicle (1) comprising
- a chassis (2), a heat engine (4) carried by said chassis (2), a starter (5) of said engine and at least one member (61, 62) for actuating said starter (5),
- a control unit (11),
- a member (7) for energizing at least the control unit (11), said energizing member (7) being able to switch from an active state to an inactive state and vice versa,
said vehicle (1) comprising a so-called economical operating mode in which, in the activated state of the energizing member (7) and in the started state of the engine (4), the control unit (11) is configured to allow the engine (4) to be stopped automatically, that is to say, without actuation of the energizing member (7), said stopping being called energized stopping of the engine (4),
the wheeled vehicle (1) also comprising a memory (28) for storing data relative to the number of starts of the heat engine (4) of the vehicle and the control unit (11) being configured to, in the economical operating mode of the vehicle (1), allow or prohibit the energized stopping of the engine (4) at least according to said stored data,
**characterized in that** the wheeled vehicle (1) comprises a memory (31) for storing each time value relative to the elapsed energized time between two successive starts of the heat engine (4) and **in that** the control unit (11) is configured to, n being an integer number greater than or equal to 1,
- calculate the sum of the last n stored time values with the time value relating to the elapsed energized time since the current start,
- compare said calculated value with a predetermined threshold value, and
- allow the energized stopping of the engine (4) at least according to the result of the comparison.

2. The wheeled vehicle according to claim 1, **characterized in that** in the economical operating mode, the control unit (11) is configured to, in the energized stopped state of the engine (4), start the engine (4) without actuation of the at least one member (61, 62) for actuating the starter (5).

3. The wheeled vehicle (1) according to one of claims 1 or 2, **characterized in that** the wheeled vehicle (1) comprises a memory (29) for storing data relative to the elapsed energized time T of the vehicle (1) since it was put into service, said energizing of the vehicle corresponding to the active state of the energizing member (7), and **in that** the control unit (11) is configured to, in the economical operating mode of the vehicle (1), allow or prohibit the energized stopping of the engine (4) at least according to said stored data.

4. The wheeled vehicle (1) according to claim 3, **characterized in that** the control unit (11) is configured to:
- calculate the number D of starts of the vehicle (1) since it was put into service over the elapsed energized time T of the vehicle (1) since it was put into service,
- compare the result of the calculation with a stored predetermined threshold value, and
- allow the energized stopping of the engine (4) at least when the result of the calculation is below the stored predetermined threshold value.

5. The wheeled vehicle (1) according to one of claims 1 to 4, **characterized in that** the energizing member (7) of the vehicle is a key disposed on the chassis (2), this key being a rotary key that can switch by rotation from an inactive state to an active state and vice versa.

6. The wheeled vehicle (1) according to one of claims 1 to 5, **characterized in that** the chassis (2) is equipped with a control station (27) and **in that** the or at least one of the members (61, 62) for actuating the starter (5) is formed by a start button with which said station (27) is equipped.

7. The wheeled vehicle (1) according to one of claims 1 to 6, **characterized in that** the vehicle (1) is a cherry picker (1) comprising:
- in addition to the chassis (2) carrying said heat engine (4),
- a platform (8),
- means (9) for lifting the platform (8) relative to the chassis (2), said lifting means (9) comprising at least one telescoping or non-telescoping lifting arm (91) arranged between a zone (30) of connection to the platform (8) and the chassis (2) and mounted to be movable using the heat engine (4) between a high position and a low position,
- a control console (10) carried by said platform (8) and equipped at least with a control (26) for the lifting means (9),
- a member (12) for activating/deactivating at least the control (26) of the lifting means (9), said activating/deactivating member (12) being mounted to be movable between an inactive position, in which at least the control (26) of the lifting means (9) is deactivated and an active position in which at least the control (26) of the lifting means (9) is activated, said activating/deactivating member (12) being equipped with means (13) for return to the inactive position, and being able to switch from the inactive position to the active position under the action of a thrust exerted on said activating/deactivating member (12) against the return means (13), and
- an indicator (14) of the active/inactive position of the activating/deactivating member (12),
- **in that** the control unit (11) is configured to control the lifting means (9) according at least to the data supplied by said control console (10),
- **in that** said cherry picker (1) has two configurations, namely a transport configuration and a working configuration, said cherry picker (1) being in the transport configuration in the low position of the arm (91) and the retracted position of the arm (91) in the case of a telescoping arm, and
- **in that**, in the working configuration of the cherry picker (1), and in the economical operating mode, the control unit (11) is configured to, in the authorized state of energized stopping of the engine (4), control the energized stopping of the heat engine (4) at least according to the data supplied by said indicator (14) of the active/inactive position of the member (12) for activating/deactivating at least the control (26) of the lifting means (9).

8. The wheeled vehicle (1) according to claim 7, **characterized in that**, in the working configuration of the cherry picker (1) and in the economical operating mode, in the energized stopped state of the heat engine (4), the control unit (11) is configured to control the starting of the heat engine (4) using the activating/deactivating member (12) of at least the control (26) of the lifting means (9), by switching of the activating/deactivating member (12) from the inactive position to the active position, without actuation of the member(s) (61, 62) for actuating the starter (5).

9. The wheeled vehicle (1) according to one of claims 7 or 8, **characterized in that** the control unit (11) comprises a presence determination module (17) configured to determine the presence or absence state of a person on the platform (8) according to data supplied by the control console (10) and **in that**, in the working configuration of the cherry picker (1), in the economical operating mode, the control unit (11) is configured to, in the authorized state of energized stopping of the engine (4), control the energized stopping of the heat engine (4) at least according to said state determined by the presence determination module (17).

10. The wheeled vehicle (1) according to one of claims 1 to 9, **characterized in that** the vehicle (1) comprises an activatable/deactivatable member (18) for controlling the cold starting of the heat engine (4) and a module (19) for determining the activated/deactivated state of said control member (18), this control member (18) being able to be activated by manual actuation, and being able to be deactivated automatically, and **in that**, in the economical operating mode, the control unit (11) is configured to, in the authorized state of energized stopping of the engine (4), control the energized stopping of the heat engine (4) at least according to the activated/deactivated state of said cold start control member (18) determined by said module (19).

11. The wheeled vehicle (1) according to one of claims 1 to 10, **characterized in that** the vehicle (1) comprises at least one electricity generator (20), and a module (21) for determining the activated/deactivated state of said electricity generator (20) and **in that**, in the economical operating mode, the control unit (11) is configured to, in the authorized state of energized stopping of the engine (4), control the energized stopping of the heat engine (4) at least according to the activated/deactivated state of the electricity generator (20) determined by said module (21).

12. The wheeled vehicle (1) according to one of claims 1 to 11, **characterized in that** the economical operating mode is an activatable/deactivatable mode and **in that** the vehicle (1) comprises a member (34) for activating and/or deactivating said mode.

13. A method for optimizing the stopping conditions of a wheeled vehicle (14) comprising
- a chassis (2), a heat engine (4) carried by said chassis (2), a starter (5) of said engine and at least one member (61, 62) for actuating said starter (5),
- a control unit (11),
- a member (7) for energizing at least the control unit (11), said energizing member (7) being able to switch from an active state to an inactive state and vice versa,
said vehicle (1) comprising, in the activated state of the energizing member (7), and in the started state of the engine (4), a so-called economical operating mode in which the control unit (11) is configured to allow the engine (4) to be stopped automatically, that is to say without actuation of the energizing member (7), said stopping being called energized stopping of the engine (4), said method comprising a step of storing of the data relating to the number of starts of the engine (4) of the vehicle (1), and the energized stopping of the engine (4) being authorized at least according to said stored data, **characterized in that** the method comprises a step of storing each time value relative to the elapsed energized time between two successive starts of the heat engine, a step of calculating the sum of last n stored time values with the time value relating to the elapsed energized time since the current start, n being an integer number greater than or equal to 1, a step of comparing said calculated value with a predefined threshold value, the energized stopping of the engine being authorized at least according to the results of the comparison.
